Europäisches Patentamt

European Patent Office

Office européen des brevets

(19)

(11) Publication number: **0 086 297**
**B1**

# EUROPEAN PATENT SPECIFICATION

(45) Date of publication of patent specification: **21.08.85**

(51) Int. Cl.⁴: **C 03 B 5/02, H 05 B 3/00**

(21) Application number: **82304962.2**

(22) Date of filing: **21.09.82**

(54) **Arc gap controller for glass-melting furnace.**

(30) Priority: **26.01.82 US 342856**

(43) Date of publication of application:
**24.08.83 Bulletin 83/34**

(45) Publication of the grant of the patent:
**21.08.85 Bulletin 85/34**

(84) Designated Contracting States:
**BE DE FR GB IT NL SE**

(56) References cited:
**DE-B-2 431 055**

(73) Proprietor: **OWENS-CORNING FIBERGLAS CORPORATION**
**Fiberglas Tower 26**
**Toledo, Ohio 43659 (US)**

(72) Inventor: **Varrasso, Eugene Camillo**
**1853 Cedar Circle**
**Heath Ohio (US)**

(74) Representative: **Warden, John Christopher et al**
**R.G.C. Jenkins & Co. 12-15, Fetter Lane**
**London EC4A 1PL (GB)**

Courier Press, Leamington Spa, England.

# Description

This invention relates to the production of glass fibers, e.g., fibers made by melting particulate batch ingredients or minerals, including basalt and the like, and, more particularly, to a method of and apparatus for controlling the positioning of an electrode in an arc furnace for producing such glass fibers.

In the utilization of arc melting furnaces for the melting of basalt, glass batch, metals or the like, or for ore reduction, the charge to be melted is introduced in pulverant form into a furnace or crucible having a plurality of top-entering, vertically suspended electrodes. The electrodes typically are pre-baked, cylindrical carbon sections which are screwed together and which are consumed during the melting process.

The electrical current is supplied to the electrodes, typically three in number, from a transformer as the electrodes are individually suspended in the furnace or crucible for independent vertical displacement. The electrodes are individually adjusted vertically to maintain a constant voltage at each electrode-batch interface location, and the amperage varies as the resistance in the furnace changes.

The electrodes must be raised and lowered independently of one another with varying furnace operating conditions, e.g., as the resistance of the arc changes upon variations in the molten material level and the molten material temperature, as the electrode is consumed, and as cooler incoming raw materials are fed into the furnace. As a result, the electrodes are frequently moved up and down as they individually hunt for the desired balance point.

In accordance with the present invention, there is provided a method of controlling the position of an arc electrode in relation to the upper surface of a body of molten glass in an arc glass-melting furnace for maintaining a stable arc, said method comprising: providing an alternating current of constant magnitude to said arc electrode, produced by a constant current producing power supply to cause a voltage drop across said arc electrode; sensing the voltage applied to said arc electrode; determining if the voltage sensed is within a predetermined range of voltages; and modifying the position of said arc electrode in relation to said upper surface of said body of molten glass if said sensed voltage is not within said predetermined range of voltages to bring said sensed voltage within said predetermined range of voltages.

In addition the invention provides an apparatus for controlling the position of an arc electrode in relation to the upper surface of a body of molten glass in an arc glass-melting furnace to maintain a stable arc, said apparatus comprising: a constant current producing power supply means connected to said arc electrode for providing an alternating current of constant magnitude thereto to cause a voltage drop across said arc electrode; means for sensing the voltage applied to said arc electrode by said current providing means; means associated with said sensing means for determining if the voltage sensed by said sensing means is within a predetermined range of voltages, said determining means providing a control signal when said sensed voltage is not within said predetermined range of voltages; and means connected to said arc electrode and said determining means for modifying the position of said arc electrode in relation to said upper surface of said body of molten glass in response to said control signal to bring said sensed voltage within said predetermined range of voltages.

The present invention is outstandingly adapted for controlling the arc gap, i.e., the distance between the electrode and the upper surface of the body of molten glass. An alternating current of constant effective magnitude, such as root-mean-square (RMS) or average current, is provided to the electrode by a power supply. The voltage applied to the electrode by the power supply is sensed to determine the magnitude of the arc gap, since the voltage applied is directly proportional to the magnitude of the impedance of such gap, which, in turn, is directly proportional to the distance between the upper surface of the molten glass and the electrode. To provide an efficient and effective melting operation, the arc gap must be maintained within a predetermined range to obtain a stable arc. In the control system of the present invention the sensed voltage, which preferably is an RMS voltage, is compared with a predetermined range of voltages.

If the sensed voltage is not within the predetermined range, the determining means provides a suitable control signal to modify the position of the electrode so that the voltage is again within the predetermined range, thereby insuring that the distance between the electrode and the upper surface of the molten body of glass is within the desired range. If the sensed voltage is larger than the maximum voltage of the predetermined range, the control system provides a signal to reduce the distance between the electrode and the molten glass. Conversely, if the sensed voltage is less than the minimum voltage of the predetermined range, the control system provides a signal to increase the distance between the electrode and the molten glass. Accordingly, the present invention provides a constant amount of power to an arc glass-melting furnace, thereby maintaining a stable melting process.

Other objectives, advantages and applications of the present invention will be made apparent by the following detailed description of the preferred embodiment of the invention.

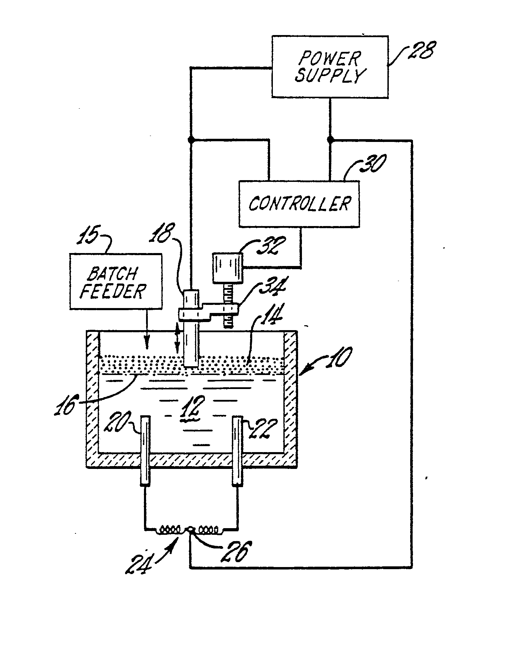

The FIGURE is a schematic view in longitudinal cross section of an arc glass-melting furnace which utilizes the control system of the present invention.

Referring to the FIGURE, an arc glass-melting furnace utilizing the present invention is indicated generally by numeral 10. Furnace 10 contains a pool of molten glass 12 with a supply of batch material 14 lying on upper surface 16 of molten glass 12. Batch material 14 is supplied by batch feeder 15, which preferably is a batch feed system for feeding pulverant raw material to an arc furnace having a plurality of arcing locations defined by vertical electrodes. A vertical feed tube gravitationally conveys the raw material to a central location inside the furnace which is above the arcing locations. A rotatable deflector is located at the bottom of the feed tube and is rotated in step-wise fashion to direct raw material from the feed tube to each of the arcing locations. A fixed deflector is located at each arcing location to confine the raw material fed into the furnace predominantly to the arcing locations. An arc electrode 18 is positioned in furnace 10 such that its lower end is located above upper surface 16 of molten glass 12. Electrodes 20 and 22 are positioned through the bottom wall of furnace 10 into molten glass 12, such that they are axially and vertically equidistant from arc electrode 18. Electrodes 20 and 22 are connected to opposite ends of magnetic reactor 24, which, e.g., may consist of two coils wrapped on a common core with a center tap or node 26 connecting the coils. Node 26 is connected to one terminal of power supply 28, and arc electrode 18 is connected to the other terminal of power supply 28.

Power supply 28 provides a constant RMS current and may be, for example, a silicon controlled rectifier power supply manufactured by the Robicon Corporation of Pittsburgh, Pennsylvania. Controller 30 which may be a meter relay having a dual set point, such as those made by the LFE Company of Waltham, Massachusetts, monitors the voltage across the terminals of power supply 28 and determines if this voltage is within a predetermined range of voltages, such range corresponding to a desired arc gap range. Controller 30 is electrically connected to drive motor 32 which is coupled to arc electrode 18 by arm 34. Preferably, drive motor 32 and arm 34 are an electrode feed mechanism for use in electric arc melting or smelting furnaces wherein a pair of horizontal, superimposed arms are each provided with clamping devices at their outer end for supporting and supplying electric power to a vertically disposed electrode depending into an arc furnace. The arms are each supported on a vertical support post; the upper arm is fixed to the post and the lower arm which normally carries the electrode is movable relative to the post to adjust the electrode to maintain a constant arc at the furnace. The movable arm is moved vertically by a jack screw carried by the upper arm and depending into contact with the lower arm. The clamping devices at the ends of the arms are spring-biased toward contact with the electrode, and a linking mechanism is provided to alternately release the arm clamping mechanisms from the electrode under the control of an actuating system utilizing fluid pressure actuated cylinders. The electrode is clamped to the lower clamping arm when the lower clamping arm is operating within its normal range of adjustment, but the electrode is released from the lower arm and clamped to the upper clamping arm whenever it is necessary to move the lower arm independently of the electrode to reposition the lower clamping arm within its normal range of adjustment. When the lower arm is so repositioned, the electrode is reclamped by the lower arm and released by the upper clamping arm.

Power supply 28 causes an electric arc to form between arc electrode 18 and upper surface 16 of molten glass 12. The electric current passes through molten glass 12 to electrodes 20 and 22. Magnetic reactor 24 tends to balance the current flow through electrodes 20 and 22 to insure that a uniform temperature is established throughout molten glass 12, by equalized current flow through individual electrodes. This is accomplished by a reactance means comprising a coil wound on a core, such coil having a first and second end and a center tap, the first end of the coil being connected to the first electrode and the second end of the coil being connected to the second electrode; and means for supplying electrical power to the arc electrode and the first and second electrodes, a first terminal of the power supplying means being connected to the arc electrode and a second terminal being connected to the center tap. This arrangement is extensively described in the copending European patent application EP—A1—85222.

If the voltage detected by controller 30 is greater than the maximum voltage of the predetermined range, controller 30 actuates drive motor 32 which causes arm 34 to lower arc electrode 18 towards upper surface 16 of molten glass 12 until the voltage is within the predetermined range. If the voltage detected by controller 30 is less than the minimum voltage of the predetermined voltage range, controller 30 actuates drive motor 32 to cause arm 34 to raise arc electrode 18 to increase the gap between arc electrode 18 and upper surface 16 until the voltage is within the predetermined range of voltages.

It is to be understood that variations and modifications of the present invention can be made without departing from the scope of the claims.

**Claims**

1. A method of controlling the position of an arc electrode (18) in relation to the upper surface (16) of a body of molten glass (12) in an arc glass-melting furnace (10) for maintaining a stable arc, said method comprising: providing an alternating current of constant magnitude to said arc electrode (18), produced by a constant current producing power supply (28) to cause a voltage drop across said arc electrode; sensing the voltage applied to said arc electrode (18); determining if the voltage sensed is within a predetermined range of voltages; and modifying the position of said arc electrode (18) in relation to said upper surface (16) of said body of molten glass (12) if said sensed voltage is not within said predetermined range of voltages to bring said sensed voltage within said predetermined range of voltages.

2. A method as recited in claim 1, wherein said sensing of the effective voltage applied to said arc electrode (18) comprises sensing the root-mean-square voltage applied to said arc electrode (18).

3. A method as recited in claim 1 or claim 2, wherein said providing of an alternating current of constant effective magnitude comprises providing a root-mean-square current of constant magnitude.

4. An apparatus for controlling the position of an arc elecrode (18) in relation to the upper surface (16) of a body of molten glass (12) in an arc glass-melting furnace (10) to maintain a stable arc, said apparatus comprising: a constant current producing power supply means (28) connected to said arc electrode for providing an alternating current of constant magnitude thereto to cause a voltage drop across said arc electrode; means (30) for sensing the voltage applied to said arc electrode (18) by said current providing means (28); means (30) associated with said sensing means (30) for determining if the voltage sensed by said sensing means (30) is within a predetermined range of voltages, said determining means (30) providing a control signal when said sensed voltage is not within said predetermined range of voltages; and means (32 and 34) connected to said arc.electrode (18) and said determining means (30) for modifying the position of said arc electrode (18) in relation to said upper surface (16) of said body of molten glass (12) in response to said control signal to bring said sensed voltage within said predetermined range of voltages.

5. An apparatus as recited in claim 4, wherein said sensing means (30) senses the root-mean-square voltage applied to said arc electrode (18).

6. An apparatus as recited in claim 4 or claim 5, wherein said means (28) for providing an alternating current of constant effective magnitude provides a root-mean-square current of constant magnitude.

7. An apparatus as recited in any of claims 4 to 6 wherein said determining means (30) comprises a meter relay with first and second set points, said first set point enabling said relay to sense a maximum voltage and said second set point enabling said relay to sense a minimum voltage.

8. An apparatus as recited in any of claims 4 to 7 wherein said means (28) for providing an alternating current of constant effective magnitude comprises a silicon controlled rectifier controlled power supply.

## Patentansprüche

1. Verfahren zur Steuerung der Position einer Lichtbogenelektrode (18) bezüglich der oberen Oberfläche (16) eines Körpers aus geschmolzenem Glas (12) in einem Lichtbogen-Glasschmelzofen (10) zur Aufrechterhaltung eines stabilen Lichtbogens, dadurch gekennzeichnet, dass der Lichtbogenelektrode (18) ein Wechselstrom konstanter Grösse zugeführt wird, welcher durch ein Konstantstrom-Netzteil (28) erzeugt wird, wobei ein Spannungsabfall entlang der Lichtbogenelektrode auftritt, dass die an die Lichtbogenelektrode (18) angelegte Spannung gemessen wird, dass bestimmt wird, ob die gemessene Spannung in einem vorgegebenen Spannungsbereich liegt, und dass die Position der Lichtbogenelektrode (18) bezüglich der oberen Oberfläche (16) des Körpers aus geschmolzenem Glas (12) verändert wird, falls die gemessene Spannung ausserhalb des vorgegebenen Spannungsbereichs liegt, um die gemessene Spannung in den vorgegebenen Spannungsbereich zu bringen.

2. Verfahren nach Anspruch 1, dadurch gekennzeichnet, dass die Messung der effektiven, an die Lichtbogenelektrode (18) angelegten Spannung die Bestimmung der an die Lichtbogenelektrode (18) angelegten Effektivwert-Spannung (quadratischer Mittelwert) beinhaltet.

3. Verfahren nach Anspruch 1 oder 2, dadurch gekennzeichnet, dass das Zuführen eines Wechselstroms von konstanter effektiver Stärke das Zuführen einer Stromstärke mit konstantem Effektivwert beinhaltet.

4. Vorrichtung zum Steuern der Position einer Lichtbogenelektrode (18) bezüglich der oberen Oberfläche (16) eines Körpers aus geschmolzenem Glas (12) in einem Lichtbogen-Glasschmelzofen (10) zur Aufrechterhaltung eines stabilen Lichtbogens, dadurch gekennzeichnet, dass ein Konstantstrom lieferndes Netzteil (28) an die Lichtbogenelektrode angeschlossen ist und dieser einen Wechselstrom konstanter Grösse zuführt, wobei ein Spannungsabfall entlang der Lichtbogenelektrode auftritt, dass ein Gerät (30) zur Messung der an der Lichtbogenelektrode (18) durch das Strom liefernde Netzteil (28) angelegten Spannung vorhanden ist, dass dem messenden Gerät (30) eine Vorrichtung (30) zugeordnet ist, die bestimmt, ob die durch das messende Gerät (30) gemessene Spannung innerhalb eines vorgegebenen Spannungsbereichs liegt, wobei die Steuervorrichtung (30) ein Steuersignal liefert, falls die gemessene Spannung nicht innerhalb des vorgegebenen Spannungsbereichs liegt, und dass Vorrichtungen (32 and 34) mit der Lichtbogenelektrode (18) und der Steuervorrichtung (30) verbunden sind, die die Position der Lichtbogenelektrode (18) bezüglich der oberen Oberfläche (16) des Körpers aus geschmolzenem Glas (12) in Abhängigkeit von dem Steuersignal verändern, so dass die gemessene Spannung in den vorgegebenen Spannungsbereich gebracht wird.

5. Vorrichtung nach Anspruch 4, dadurch gekennzeichnet, dass das messende Gerät (30) die an die Lichtbogenelektrode (18) angelegte Effektivwert-Spannung misst.

6. Vorrichtung nach Anspruch 4 oder 5, dadurch gekennzeichnet, dass das einen Wechselstrom von konstanter effektiver Stärke liefernde Netzteil (28) einen Strom liefert, dessen Effektivwert einen konstanten Wert aufweist.

7. Vorrichtung nach einem der Ansprüche 4 bis 6, dadurch gekennzeichnet, dass die Steuervorrichtung (30) einen Messkontaktgeber mit einem ersten und einem zweiten Einsatzpunkt umfasst, wobei der Kontaktgeber beim ersten Einsatzpunkt eine maximale Spannung und beim zweiten Einsatzpunkt eine minimale Spannung feststellt.

8. Vorrichtung nach einem der Ansprüche 4 bis 7, dadurch gekennzeichnet, dass das einen Wechselstrom von konstanter effektiver Stärke liefernde Teil (28) ein durch einen steuerbaren Halbleiter-Gleichrichter gesteuertes bzw. geregeltes Netzteil umfasste.

**Revendications**

1. Procédé de réglage de la position d'une électrode d'arc (18) par rapport à la surface supérieure (16) d'une masse de verre en fusion (12) dans un four à arc de fusion du verre (10) pour maintenir un arc stable, ledit procédé consistant: à fournir à ladite électrode d'arc (18) un courant alternatif de grandeur constante, délivré par une alimentation en énergie (28) produisant un courant constant, afin de provoquer une chute de tension à travers ladite électrode d'arc; à détecter la tension appliquée à ladite électrode d'arc (18); à déterminer si la tension détectée se trouve à l'intérieur d'un intervalle de tensions prédéterminé; et, si ladite tension détectée ne se trouve pas à l'intérieur dudit intervalle prédéterminé de tensions, à modifier la position de ladite électrode d'arc (18) par rapport à ladite surface supérieure (16) de ladite masse de verre en fusion (12) afin de ramener ladite tension détectée à l'intérieur dudit intervalle de tensions prédéterminé.

2. Procédé selon la revendication 1, dans lequel ladite détection de la tension effective apliquée à ladite électrode d'arc (18) consiste à détector la tension efficace appliquée à ladite électrode d'arc (18).

3. Procédé selon la revendication 1 ou la revendication 2, dans lequel ladite fourniture d'un courant alternatif de grandeur effective constante consiste à fournir un courant efficace de grandeur constante.

4. Appareil pour régler la position d'une électrode d'arc (18) par rapport à la surface supérieure (16) d'une masse de verre en fusion (12) dans un four à arc de fusion du verre (10), pour maintenir un arc stable, ledit appareil comprenant: une alimentation en énergie (28) produisant un courant constant, raccordée à ladite électrode d'arc pour lui fournir un courant alternatif de grandeur constante afin de provoquer une chute de tension à travers ladite électrode d'arc; un moyen (30) pour détecter la tension appliquée à ladite électrode d'arc (18) par ladite alimentation en énergie (28); un moyen (30) associé audit moyen de détection (30) pour déterminer si la tension détectée par ledit moyen de détection (30) se trouve à l'intérieur d'un intervalle de tensions prédéterminé, ledit moyen de détermination (30) fournissant un signal de commande lorsque ladite tension détectée ne se trouve pas à l'intérieur dudit intervalle de tensions prédéterminé; et un moyen (32 et 34) raccordé à ladite électrode d'arc (18) et audit moyen de détermination (30) pour modifier la position de ladite électrode d'arc (18) par rapport à ladite surface supérieure (16) de ladite masse de verre en fusion (12), en réponse audit signal de commande, afin de ramener ladite tension détectée à l'intérieur dudit intervalle de tensions prédéterminé.

5. Appareil selon la revendication 4, dans lequel ledit moyen de détection (30) détecte la tension efficace appliquée à ladite électrode d'arc (18).

6. Appareil selon la revendication 4 ou la revendication 5, dans lequel ledit moyen (28) de fourniture d'un courant alternatif de grandeur effective constante fournit un courant efficace de grandeur constante.

7. Appareil selon l'une quelconque des revendications 4 à 6, dans lequel ledit moyen de détermination (30) comprend un relais de compteur ayant un premier et un second points de repère, ledit premier point de repère permettant audit relais de détecter une tension maximale et ledit second point de repère permettant audit relais de détecter une tension minimale.

8. Appareil selon l'une quelconque des revendications 4 à 7, dans lequel ledit moyen (28) de fourniture d'un courant alternatif de grandeur effective constante comprend une alimentation en énergie commandée par un redresseur au silicium commandé.